# EUROPEAN PATENT SPECIFICATION

(11) **EP 2 720 808 B1**
(45) Date of publication and mention of the grant of the patent: **23.03.2016**
(21) Application number: 12730289.1
(22) Date of filing: 04.06.2012
(51) Int. Cl.: B05D 7/00, B05D 5/08, B05D 3/04, B05D 3/14, B05D 1/38, C09D 5/00

(54) **HYDROPHOBIC HYDROCARBON COATINGS**
HYDROPHOBE KOHLENWASSERSTOFFBESCHICHTUNGEN
REVÊTEMENTS EN HYDROCARBURE HYDROPHOBE

(30) Priority: 15.06.2011 US 201161497362 P
(43) Date of publication of application: 23.04.2014
(73) Proprietor: 3M Innovative Properties Company, Saint Paul, MN 55133-3427 (US)
(72) Inventor: RIDDLE, Justin A.,, Saint Paul, Minnesota 55133-3427 (US); JING, Naiyong,, Saint Paul, Minnesota 55133-3427 (US)
(74) Representative: Herzog, Fiesser & Partner Patentanwälte PartG mbB
(86) International application number: PCT/US2012/040669
(87) International publication number: WO 2012/173803

(56) References cited:
- WO-A1-2007/149617
- WO-A1-2009/125018
- US-A1- 2010 304 086

## Description

### Cross Reference To Related Application

This application claims the benefit of U.S. Provisional Patent Application No. 61/497362, filed June 15, 2011, the disclosure of which is incorporated by reference herein in its entirety

### Field

Articles and methods of making articles having hydrophobic hydrocarbon coatings are provided.

### Background

Various compositions of hydrophobic materials have been applied to surfaces to impart low surface energy characteristics such as oil and/or water repellency (oleophobicity and/or hydrophobicity). Silane compounds, for example, have been used to provide hydrophobic coating compositions to substrates such as glass and ceramic materials. Such silane compounds include those, for example, described in U.S. Patent No. 3,950,588 (McDougal), U.S. Patent No. 7,335,786 (Iyer et al.), U.S. Patent No. 7,745,653 (Iyer et al.), and U.S. Patent Application Publication No. 2010/0167978 (Iyer et al.).

### Summary

Articles having a hydrophobic hydrocarbon coating are provided. More specifically, the articles include a substrate, a primer layer of acid-sintered silica nanoparticles adjacent to a surface of the substrate, and a hydrophobic hydrocarbon layer attached to the primer layer. The hydrophobic hydrocarbon layer is formed by reaction of the primer layer with a silane compound having a reactive silyl group and a hydrophobic hydrocarbon group. Due to the presence of the primer layer, the silane compounds can be indirectly attached to variety of substrates. The articles typically have surface that are easy to clean, smudge resistant, and fingerprint resistant (see for example US 2010/0304086 A1).

In a first aspect, an article is provided that includes (a) a substrate, (b) a primer layer attached to a surface of the substrate, and (c) a hydrophobic hydrocarbon layer attached to the primer layer. The primer layer contains a plurality of acid-sintered silica nanoparticles arranged to form a continuous, three-dimensional, porous network. The hydrophobic hydrocarbon layer contains the reaction product of a silane compound with a surface of the acid-sintered silica nanoparticles in the primer layer. The silane compound contains at least one reactive silyl group and a hydrophobic hydrocarbon group.

In many embodiments, the silane compound used to form the hydrophobic hydrocarbon layer is of Formula (I).

R¹-[Si(R²)₃₋ₓ(R³)ₓ]_{y} (I)

In Formula (I), group R¹ is an alkyl, alkylene, aryl, arylene, or combination thereof. Each R² is independently hydroxyl or a hydrolyzable group. Each R³ is independently a non-hydrolyzable group. Each variable x is an integer equal to 0, 1, or 2. The variable y is an integer equal to 1 or 2.

In a second aspect, a method of making an article is provided. The method includes providing a substrate and forming a primer layer on a surface of the substrate. The primer layer contains a plurality of acid-sintered silica nanoparticles arranged to form a continuous three-dimensional porous network. The method further includes attaching a hydrophobic hydrocarbon layer to the primer layer by reacting a surface of the acid-sintered silica nanoparticles in the primer layer with a silane compound. The silane compound contains both a reactive silyl group and a hydrophobic hydrocarbon group. In many embodiments, the silane compound used to form the hydrophobic hydrocarbon layer is of Formula (I).

### Brief Description of the Drawings

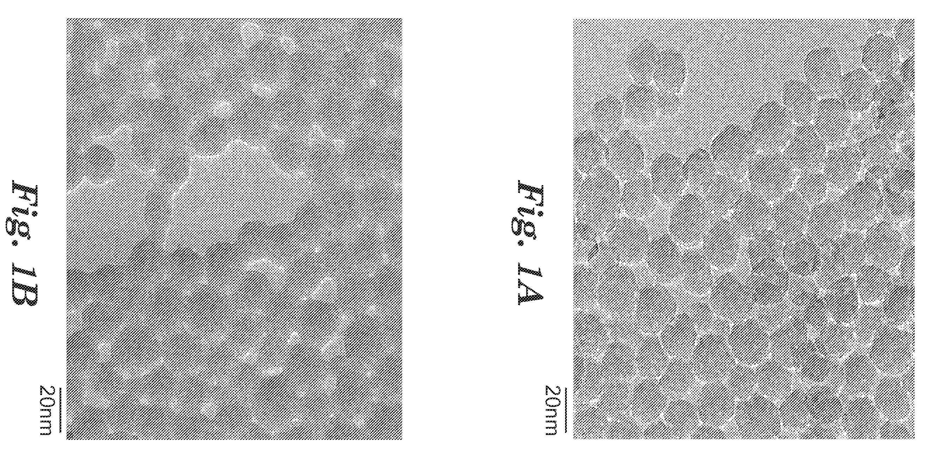

Figure 1A is a transmission electron micrograph of a comparative example primer layer formed without acid-sintering of the silica nanoparticles. Figure 1B is a transmission electron micrograph of an exemplary primer layer formed using acid-sintered silica nanoparticles.

### Detailed Description

Articles having hydrophobic coatings are provided. More specifically, the articles include a substrate, a primer layer of acid-sintered silica nanoparticles adjacent to the substrate, and a hydrophobic hydrocarbon layer that is attached to the primer layer. The primer layer is positioned between the substrate and the hydrophobic hydrocarbon layer. The hydrophobic hydrocarbon layer is formed from a silane compound that contains both a reactive silyl group and a hydrophobic hydrocarbon group. The silane compound is covalently bonded to the primer layer through a reaction of the reactive silyl group with a surface of the acid-sintered silica nanoparticles in the primer layer resulting in the formation of a-Si-O-Si- bond between the primer layer and the hydrophobic hydrocarbon layer. A variety of substrates can be used including those that traditionally have not been used with silane compounds because the substrates lack a group capable of reacting with the silyl group of the silane compounds. The surface of the substrate can be altered to become hydrophobic or more hydrophobic through treatment with the primer layer and the reaction of the silane compound with the primer layer.

The recitation of any numerical range by endpoints is meant to include the endpoints of the range, all numbers within the range, and any narrower range within the stated range.

The term "a", "an", and "the" are used interchangeably with "at least one" to mean one or more of the elements being described.

The term "and/or" means either or both. For example, the expression "A and/or B" means A, B, or a combination of A and B.

The term "alkyl" refers to a monovalent group that is a radical of an alkane and includes groups that are linear, branched, cyclic, bicyclic, or a combination thereof. The alkyl group typically has 1 to 30 carbon atoms. In some embodiments, the alkyl group contains 1 to 20 carbon atoms, 1 to 10 carbon atoms, 1 to 6 carbon atoms, 1 to 4 carbon atoms, or 1 to 3 carbon atoms.

The term "alkylene" refers to a divalent group that is a radical of an alkane and includes groups that are linear, branched, cyclic, bicyclic, or a combination thereof. The alkylene group typically has 1 to 30 carbon atoms. In some embodiments, the alkylene group has 1 to 20 carbon atoms, 1 to 10 carbon atoms, 1 to 6 carbon atoms, or 1 to 4 carbon atoms.

The term "alkoxy" refers to refers to a monovalent group having an oxy group bonded directly to an alkyl group.

The term "aryl" refers to a monovalent group that is aromatic and carbocyclic. The aryl has at least one aromatic ring and can have one or more additional carbocyclic rings that are fused to the aromatic ring. Any additional rings can be unsaturated, partially saturated, or saturated. Aryl groups often have 6 to 20 carbon atoms, 6 to 18 carbon atoms, 6 to 16 carbon atoms, 6 to 12 carbon atoms, or 6 to 10 carbon atoms.

The term "arylene" refers to a divalent group that is aromatic and carbocyclic. The arylene has at least one aromatic ring and can have one or more additional carbocyclic rings that are fused to the aromatic ring. Any additional rings can be unsaturated, partially saturated, or saturated. Arylene groups often have 6 to 20 carbon atoms, 6 to 18 carbon atoms, 6 to 16 carbon atoms, 6 to 12 carbon atoms, or 6 to 10 carbon atoms.

The term "aryloxy" refers to a monovalent group having an oxy group bonded directly to an aryl group.

The term "aralkyl" refers to a monovalent group that is an alkyl group substituted with an aryl group. Aralkyl groups often have an alkyl portion with 1 to 10 carbon atoms, 1 to 6 carbon atoms, or 1 to 4 carbon atoms and an aryl portion with 6 to 20 carbon atoms, 6 to 18 carbon atoms, 6 to 16 carbon atoms, 6 to 12 carbon atoms, or 6 to 10 carbon atoms. The aryl portion is often phenyl.

The term "aralkyloxy" refers to a monovalent group having an oxy group bonded directly to an aralkyl group. Equivalently, it can be considered to be an alkoxy group substituted with an aryl group.

The term "acyloxy" refers to a monovalent group of formula -O(CO)R^{b} where R^{b} is alkyl, aryl, or aralkyl. Suitable alkyl R^{b} groups often have 1 to 10 carbon atoms, 1 to 6 carbon atoms, or 1 to 4 carbon atoms. Suitable aryl R^{b} groups often have 6 to 12 carbon atoms such as, for example, phenyl. Suitable aralkyl R^{b} groups often have an alkyl group with 1 to 10 carbon atoms, 1 to 6 carbon atoms, or 1 to 4 carbon atoms that is substituted with an aryl having 6 to 12 carbon atoms such as, for example, phenyl.

The term "halo" refers to a halogen atom such as fluoro, bromo, iodo, or chloro. When part of a reactive silyl, the halo group is often chloro.

The term "silyl" refers to a monovalent group of formula -Si(R^{c})₃ where R^{c} is hydroxyl, a hydrolyzable group, or a non-hydrolyzable group. In many embodiments, the silyl group is a "reactive silyl" group, which means that the silyl group contains at least one R^{c} group that is a hydroxyl group or hydrolyzable group. Some reactive silyl groups are of formula -Si(R²)₃₋ₓ(R³)ₓ where each group R² is independently hydroxyl or a hydrolyzable group and each group R³ is independently a non-hydrolyzable group. The variable x is an integer equal to 0, 1, or 2.

The term "hydrolyzable group" refers to a group that can react with water having a pH of 1 to 10 under conditions of atmospheric pressure. The hydrolyzable group is often converted to a hydroxyl group when it reacts. The hydroxyl group often undergoes further reactions. Typical hydrolyzable groups include, but are not limited to, alkoxy, aryloxy, aralkyloxy, acyloxy, or halo. As used herein, the term is often used in reference to one of more groups bonded to a silicon atom in a silyl group.

The term "non-hydrolyzable group" refers to a group that cannot react with water having a pH of 1 to 10 under conditions of atmospheric pressure. Typical non-hydrolyzable groups include, but are not limited to alkyl, aryl, and aralkyl. As used herein, the term is often used in reference to one of more groups bonded to a silicon atom in a silyl group.

The terms "hydrocarbon layer" and "hydrophobic hydrocarbon layer" are used interchangeably and refer to a hydrophobic layer attached to the primer layer by reaction of a surface of the acid-sintered silica nanoparticles in the primer layer with a silane compound having a reactive silyl group and a hydrophobic hydrocarbon group.

In a first aspect, an article is provided that includes (a) a substrate, (b) a primer layer attached to a surface of the substrate, and (c) a hydrophobic hydrocarbon layer attached to the primer layer. The primer layer is positioned between the substrate and the hydrophobic hydrocarbon layer. The primer layer contains a plurality of acid-sintered silica nanoparticles arranged to form a continuous three-dimensional porous network. The hydrophobic hydrocarbon layer contains the reaction product of a silane compound with a surface of the acid-sintered silica nanoparticles in the primer layer. The silane compound contains at least one reactive silyl group and a hydrophobic hydrocarbon group.

The articles have a hydrophobic surface (i.e., coating) resulting from the combination of a primer layer and a hydrophobic hydrocarbon layer. Providing such a coating that is durable (e.g., a coating that can withstand repeating rubbing and/or cleaning) has been a challenge in the art. Surprisingly, silica nanoparticles can be used to provide a hydrophobic primer layer that can durably adhere to a variety of substrate materials. Multiple silica nanoparticles in the primer layer are joined together into a three-dimensional network by low temperature (e.g., at or near room temperature) sintering in the presence of an acid. The hydrophobicity can be further enhanced by reacting silane compounds with the acid sintered silica nanoparticles in the primer layer. Suitable silane compounds contain both a reactive silyl group and a hydrophobic hydrocarbon group. The silane compounds are covalently attached to the acid-sintered silica nanoparticles in the primer layer through a -Si-O-Si- group.

The use of the primer layer between the hydrophobic hydrocarbon layer and the substrate allows the use of many substrates that do not have a hydroxyl group that can react with the silane compound used to form the hydrophobic layer can be used. This allows that use of a wider range of substrate surfaces than have typically been considered suitable for use with coating compositions based on silane compounds (i.e., the substrates lack a group that can react with the silyl group of the silane compounds).

Suitable substrates can be flexible or rigid, opaque or transparent, reflective or non-reflective, and of any desired size and shape. The substrate can have a surface that is a polymeric material, glass or ceramic material, metal, composite material (e.g., polymer material with inorganic materials), and the like. The substrates can be sheets, films, molded shapes, or other types of surfaces.

Suitable polymeric materials for substrates include, but are not limited to, polyesters (e.g., polyethylene terephthalate or polybutylene terephthalate), polycarbonates, acrylonitrile butadiene styrene (ABS) copolymers, poly(meth)acrylates (e.g., polymethylmethacrylate, or copolymers of various (meth)acrylates), polystyrenes, polysulfones, polyether sulfones, epoxy polymers (e.g., homopolymers or epoxy addition polymers with polydiamines or polydithiols), polyolefins (e.g., polyethylene and copolymers thereof or polypropylene and copolymers thereof), polyvinyl chlorides, polyurethanes, fluorinated polymers, cellulosic materials, derivatives thereof, and the like. In some embodiments, where increased transmissivity is desired, the polymeric substrate can be transparent. The term "transparent" means transmitting at least 85 percent, at least 90 percent, or at least 95 percent of incident light in the visible spectrum (wavelengths in the range of 400 to 700 nanometers). Transparent substrates may be colored or colorless.

Suitable metals include, for example, pure metals, metal alloys, metal oxides, and other metal compounds. Examples of metals include, but are not limited to, chromium, iron, aluminum, silver, gold, copper, nickel, zinc, cobalt, tin, steel (e.g., stainless steel or carbon steel), brass, oxides thereof, alloys thereof, and mixtures thereof.

In some embodiments, the substrate is hydrophobic. The terms "hydrophobic" and "hydrophobicity" refer to a surface on which drops of water or aqueous solutions exhibit a static water contact angle of at least 50 degrees, at least 60 degrees, at least 70 degrees, at least 90 degrees, or at least 100 degrees. The primer layer and/or the hydrophobic hydrocarbon layer may alter the hydrophobicity of the substrate. In many embodiments, the hydrophobicity of the substrate is further enhanced by the primer layer and/or the hydrophobic hydrocarbon layer.

A primer layer is applied to the substrate surface. The primer layer includes a porous network of acid-sintered silica nanoparticles. The term "nanoparticle" refers to silica particles that are submicron in size. The nanoparticles typically have an average particle size, which typically refers to the average longest dimension of the particles, that is no greater than 500 nanometers, no greater than 200 nanometers, no greater than 100 nanometers, no greater than 75 nanometers, no greater than 50 nanometers, no greater than 40 nanometers, no greater than 25 nanometers, or no greater than 20 nanometers.

The average particle size is often determined using transmission electron microscopy but various light scattering methods can be used as well. The average particle size refers to the average particle size of the primary silica nanoparticles used to form the primer layer coating. The average particle size typically refers to the average size of non-agglomerated and/or non-aggregated and/or non-sintered single nanoparticles of silica. That is, the average particle size refers to the average particle size of the primary silica nanoparticles prior to sintering under acidic conditions.

The silica nanoparticles in the primer layer are acid-sintered. At least some adjacent silica nanoparticles tend to have bonds such as silica "necks" joining them together. These silica necks are typically formed by acidification of the silica nanoparticles. Stated differently, at least some adjacent silica nanoparticles tend to be joined together forming a three-dimensional porous network. Figure 1B is a transmission electron micrograph of one example primer layer. Unlike fumed silica particles that are simply chains of sintered silica nanoparticles, the acid-sintered primer layer is a continuous network of sintered nanoparticles that can be arranged to form a layer. The chains of fumed silica are not connected together and can only be used to form a layer by combination with a binder such as a polymeric binder. In contrast, the primer layer of the acid-sintered silica nanoparticles typically does not include an organic binder. Further, fumed silica particles are formed at relatively high temperatures such as at temperatures greater than 300°C, greater than 400°C, or greater then 500°C. In contrast, the acid-sintered primer layer is formed by sintering the silica nanoparticles at relatively low temperatures such as at or near room temperature in the presence of an acid.

The term "porous" refers to the presence of voids between the individual silica nanoparticles within the continuous primer layer coating. Preferably, when dried, the network of acid-sintered nanoparticles has a porosity of 20 to 50 volume percent, 25 to 45 volume percent, or 30 to 40 volume percent. In some embodiments the porosity may be higher. Porosity may be calculated from the refractive index of the primer layer coating according to published procedures such as in W. L. Bragg and A. B. Pippard, *Acta Crystallographica,* 6, 865 (1953). Porosity tends to correlate to the roughness of the surface. Unexpectedly, the porosity tends to also correlate with the hydrophobicity of the surface. That is, increased surface roughness tends to lead to increased hydrophobicity. Porosity of the surface can often be increased by using silica nanoparticles with a larger average particle size or by using a mixture of silica nanoparticles with different shapes.

The term "network" refers to a continuous three-dimensional structure formed by linking together silica nanoparticles. The term "continuous" means that the individual silica nanoparticles are linked over the dimension of the primer layer coating. The primer layer typically has virtually no discontinuities or gaps in the areas where the primer layer coating composition is applied to the substrate.

The primary silica nanoparticles used to prepare the primer layer coating compositions can have any desired shape or mixture of shapes. The silica nanoparticles can be spherical or non-spherical (i.e., acicular) with any desired aspect ratio. Aspect ratio refers to the ratio of the average longest dimension of the nanoparticles to the average shortest dimension of acicular silica nanoparticles. The aspect ratio of acicular silica nanoparticles is often at least 2:1, at least 3:1, at least 5:1, or at least 10:1. Some acicular nanoparticles are in the shape of rods, ellipsoids, needles, and the like. The shape of the nanoparticles can be regular or irregular. The porosity of the coatings can be varied by changing the amount of regular and irregular shaped nanoparticles in the composition and/or by changing the amount of spherical and acicular nanoparticles in the composition.

If the silica nanoparticles are spherical, the average diameter is often less than 50 nanometers, less than 40 nanometers, less than 25 nanometers, or less than 20 nanometers. Some nanoparticles can have an even smaller average diameter such as less than 10 nanometers or less than 5 nanometers.

If the silica nanoparticles are acicular, they often have an average width (smallest dimension) equal to at least 1 nanometer, at least 2 nanometers, or at least 5 nanometers. The average width of acicular silica nanoparticles is often no greater than 25 nanometers, no greater than 20 nanometers, or no greater than 10 nanometers. The acicular silica nanoparticles can have an average length D₁ measured by dynamic light scattering methods that is, for example, at least 40 nanometers, at least 50 nanometers, at least 75 nanometers, or at least 100 nanometers. The average length D₁ (e.g., longer dimension) can be up to 200 nanometers, up to 400 nanometers, or up to 500 nanometers. The acicular colloidal silica particles may have degree of elongation D₁/D₂ in a range of 5 to 30, wherein D₂ means a diameter in nanometers calculated by the equation D₂ = 2720/S and S means specific surface area in meters squared per gram (m² /gram) of the nanoparticle, as described in U.S. Patent No. 5,221,497 (Watanabe et al.).

In many embodiments, the silica nanoparticles are selected to have an average specific surface area equal to at least 150 m²/gram, at least 200 m²/gram, at least 250 m²/gram, at least 300 m²/gram, or at least 400 m²/gram. Spherical nanoparticles having average specific surface areas equal to at least 150 m²/gram often have an average diameter less than 40 nanometers, less than 30 nanometers, less than 25 nanometers, or less than 20 nanometers.

In certain embodiments, the silica nanoparticles preferably have an average particle size (i.e., longest dimension) that is no greater than 50 nanometers, no greater than 40 nanometers, or no greater than 25 nanometers. If desired, larger silica nanoparticles may be added in limited amounts that do not deleteriously decrease the coatability of the primer layer coating composition on a selected substrate, that do not reduce the desired transmissivity of the resulting primer layer coating, and/or that do not reduce the desired hydrophobicity of the resulting primer layer coating. Thus, various sizes and/or various shapes of particles may be used in combination.

In certain embodiments, bimodal distributions of particle sizes may be used. For example, nanoparticles having an average particle size of at least 50 nanometers (e.g., in the range of 50 to 200 nanometers or in the range of 50 to 100 nanometers) can be used in combination with nanoparticles having an average diameter no greater than 40 nanometers. The weight ratio of the larger to smaller nanoparticles can be in the range of 2: 98 to 98: 2, in the range of 5: 95 to 95: 5, in the range of 10: 90 to 90: 10, or in the range of 20: 80 to 80: 20.

Generally, the total weight of silica nanoparticles (regardless of size) in a primer layer coating composition is at least 0.1 weight percent based on the total weight of the primer layer coating composition. For example, the primer layer coating composition can include at least 1 weight percent, at least 2 weight percent, or at least 5 weight percent silica nanoparticles. The primer layer coating composition often contains up to 40 weight percent, up to 30 weight percent, up to 25 weight percent, up to 20 weight percent, or up to 10 weight percent silica nanoparticles. The amount of silica nanoparticles in the primer layer coating composition can be, for example, in the range of 0.1 to 40 weight percent, in the range of 1 to 40 weight percent, in the range of 1 to 25 weight percent, in the range of 1 to 20 weight percent, in the range of 5 to 20 weight percent, in the range of 1 to 10 weight percent, in the range of 5 to 10 weight percent, or in the range of 1 to 7 weight percent. In some example primer layer coating compositions, a mixture of nanoparticles of different sizes can be used. For example, the primer layer coating compositions can include 0.1 to 20 weight percent silica nanoparticles having an average particle size of 40 nanometers or less and 0 to 20 weight percent silica nanoparticles having an average particle size of 50 nanometers or greater. The amount is based on a total weight of the primer layer coating composition.

The silica nanoparticles are typically commercially available in the form of a silica sol. Some example spherical silica nanoparticles are available in the form of aqueous-based silica sols such as those commercially available under the trade designation LUDOX (e.g., LUDOX SM) from E.I. DuPont de Nemours and Co., Inc. (Wilmington, DE). Other example aqueous-based silica sols are commercially available under the trade designation NYACOL from Nyacol Co. (Ashland, MA). Still other example aqueous-based silica sols are commercially available under the trade designation NALCO (e.g., NALCO 1115, NALCO 2326, and NALCO 1130) from Ondea Nalco Chemical Co. (Oak Brook, IL). Yet other example aqueous-based silica sols are commercially available under the trade designation REMASOL (e.g., REMASOL SP30) from Remet Corporation (Utica, NY) and under the trade designation SILCO (e.g., SILCO LI-518) from Silco International Inc (Portland, OR).

Suitable non-spherical (i.e., acicular) silica nanoparticles may be obtained in the form of aqueous-based silica sols under the trade designation SNOWTEX from Nissan Chemical Industries (Tokyo, Japan). For example, SNOWTEX-UP contains silica nanoparticles having a diameter in the range of about 9 to 15 nanometers with lengths in a range of 40 to 300 nanometers. SNOWTEX-PS-S and SNOWTEX-PS-M have a chain of beads morphology. The SNOWTEX-PS-M particles are about 18 to 25 nanometers in diameter and have lengths of 80 to 150 nanometers. The SNOWTEX-PS-S has a particle diameter of 10-15 nm and a length of 80-120 nm.

Either water or a water-miscible organic solvent can be used to dilute commercially available aqueous-based silica sols. However, sols of sodium stabilized silica nanoparticles are usually acidified prior to dilution with water or a water-miscible organic solvent such as ethanol. Dilution prior to acidification may yield poor or non-uniform primer layer coatings. Ammonium stabilized silica nanoparticles may generally be diluted and acidified in any order.

The primer layer coating composition contains an acid having a pKa (H₂O) that is less than or equal to 3.5. The use of weaker acids such as those having a pKa greater than 4 (e.g., acetic acid) typically does not result in a uniform coating having the desirable transmissivity and/or durability. In particular, coating compositions with weaker acids such as acetic acid typically bead up on the surface of a substrate. The pKa of the acid added to the coating composition is often less than 3, less than 2.5, less than 2, less than 1.5, or less than 1. Useful acids that can be used to adjust the pH of the primer coating composition include both organic and inorganic acids. Example acids include, but are not limited to, oxalic acid, citric acid, H₂SO₃, H₃PO₄, CF₃CO₂H, HCl, HBr, HI, HBrO₃, HNO₃, HClO₄, H₂SO₄, CH₃SO₃H, CF₃SO₃H, CF₃CO₂H, and CH₃SO₂OH. In many embodiments, the acid is HCl, HNO₃, H₂SO₄, or H₃PO₄. In some embodiments, it is desirable to provide a mixture of an organic and inorganic acid. If commercially available acidic silica sols are used, the addition of one of the acids listed above typically result in primer layers having the desired uniformity.

The coating composition generally contains sufficient acid to provide a pH no greater than 5. The pH is often no greater than 4.5, no greater than 4, no greater than 3.5, or no greater than 3. For example, the pH is often in the range of 2 to 5. In some embodiments, the coating composition can be adjusted to a pH in the range of 5 to 6 after first reducing the pH to less than 5. This pH adjustment can allow the coating of more pH sensitive substrates.

The primer layer coating composition containing the acidified silica nanoparticles usually is applied to a substrate surface and then dried. In many embodiments, the primer layer coating composition contains (a) silica nanoparticles having an average particle diameter (i.e., average particle diameter prior to acid-sintering) no greater than 40 nanometers and (b) an acid with a pKa (H₂O) that is less than or equal to 3.5. The pH of the primer layer coating composition often is less than or equal to 5 such as in the pH range of 2 to 5.

The acidified silica nanoparticles appear to be stable when the pH is in the range 2 to 4. Light-scattering measurements have demonstrated that the acidified silica nanoparticles at pH in the range of 2 to 3 and at a concentration of 10 weight percent silica nanoparticles can retain the same size for more than a week or even more than a month. Such acidified primer layer coating compositions are expected to remain stable even longer if the concentration of silica nanoparticles is lower than 10 weight percent.

The primer layer coating composition typically further includes water or a mixture of water plus a water-miscible organic solvent. Suitable water-miscible organic solvents include, but are not limited to, various alcohols (e.g., ethanol or isopropanol) and glycols (e.g., propylene glycol), ethers (e.g., propylene glycol methyl ether), ketones (e.g., acetone), and esters (e.g., propylene glycol monomethyl ether acetate). The silica nanoparticles included in the primer layer coating compositions typically are not surface modified.

In some embodiments, optional silane coupling agents, which contain a plurality of reactive silyl groups, can be added to the primer layer coating compositions. Some example coupling agents include, but are not limited to, tetraalkoxysilanes (e.g., tetraethylorthosilicate (TEOS)) and oligomeric forms of tetraalkoxysilane such as alkyl polysilicates (e.g., poly(diethoxysiloxane). These coupling agents may, at least in some embodiments, improve binding between silica nanoparticles. If added, the coupling agent is typically added to the primer layer coating composition at levels of 0.1 to 30 weight percent based on the weight of the silica nanoparticles in the coating composition. In some examples, the coupling agent is present in an amount in the range of 0.1 to 25 weight percent, in the range of 1 to 25 weight percent, in the range of 5 to 25 weight percent, in the range of 10 to 25 weight percent, in the range of 0.1 to 20 weight percent, in the range of 1 to 20 weight percent, in the range of 1 to 15 weight percent, in the range of 1 to 10 weight percent, or in the range of 1 to 5 weight percent based on the weight of silica nanoparticles. In other examples, however, the primer layer coating compositions do not include a coupling agent.

Many primer layer coating compositions do not contain other types of binders other than coupling agents. That is, many primer layer coating compositions do not contain typical polymeric binders.

The primer layer coating compositions can be applied directly to any substrate. The substrate can be an organic material (e.g., polymeric) or inorganic material (e.g., glass, ceramic, or metal). In many embodiments, the substrate is hydrophobic. The wetting property of the primer layer coating compositions on hydrophobic surfaces (e.g., hydrophobic polymeric substrates such as polyethylene terephthalate (PET) or polycarbonate (PC)) is a function of the pH of the primer layer coating compositions and the pKa of the acid used to adjust the pH. The coating compositions can be applied, for example, to hydrophobic substrates when acidified to a pH in the range of 2 to 5. In contrast, similar primer layer coating compositions with a neutral or basic pH tend to bead up on the hydrophobic substrates.

The primer layer is a continuous network of acid-sintered silica nanoparticles. As applied to the substrate surface, the primer layer coating composition is a sol. After the primer layer coating composition is applied to the substrate, a gelled material forms as the sol dries and the silica nanoparticles sinter to form the continuous network. Micrographs reveal the formation of silica "necks" between adjacent nanoparticles that are created by the acid even in the absence of other silicon-containing materials such as the silane coupling agents. The formation of these necks is attributed to the catalytic action of strong acid in making and breaking siloxane bonds.

To uniformly apply a primer layer coating composition onto a substrate such as a hydrophobic substrate, it optionally may be desirable to increase the surface energy of the substrate surface and/or reduce the surface tension of the primer layer coating composition. The surface energy of the substrate surface may be increased by oxidizing the substrate surface prior to coating using methods such as corona discharge or flame treatment methods. These methods may also improve adhesion of the primer layer coating composition to the substrate. Other methods capable of increasing the surface energy of the substrate include the use of additional primer layers such as thin coatings of polyvinylidene chloride (PVDC) with added surfactants. The surfactants tend to improve wetting and the PVDC tends to improve adhesion. Alternatively, the surface tension of the primer layer coating composition may be decreased by addition of lower alcohols (e.g., alcohols having 1 to 8 carbon atoms, 1 to 6 carbon atoms, or 1 to 4 carbon atoms).

In some instances, however, in order to improve the coating hydrophobicity for desired properties and to ensure uniform coating of the article from an aqueous or aqueous-based medium (e.g., a water/alcohol medium), it may be beneficial to add a wetting agent, which is typically a surfactant, to the primer layer coating composition. Surfactants are molecules having both hydrophilic (polar) and hydrophobic (non-polar) regions and that are capable of reducing the surface tension of the primer layer coating composition. Useful surfactants may include those disclosed, for example, in U.S. Patent No. 6,040,053 (Scholz et al.). If added, the surfactant is typically present in an amount up to 5 weight percent based on a total weight of the primer layer coating composition. For example, the amount can be up to 4 weight percent, up to 2 weight percent, or up to 1 weight percent. The surfactant is typically present in an amount equal to at least 0.001 weight percent, at least 0.005 weight percent, at least 0.01 weight percent, at least 0.05 weight percent, at least 0.1 weight percent, or at least 0.5 weight percent.

Some surfactants for use in the primer layer coating compositions are anionic surfactants. Useful anionic surfactants often have a molecular structure with (1) at least one hydrophobic group such as a C₆-C₂₀ alkyl, alkylaryl, and/or alkenyl group, (2) at least one anionic group such as sulfate, sulfonate, phosphate, polyoxyethylene sulfate, polyoxyethylene sulfonate, polyoxyethylene phosphate, and the like, and/or the salts of such anionic groups. Suitable salts include alkali metal salts, ammonium salts, tertiary amino salts, and the like. Representative commercial examples of useful anionic surfactants include, but are not limited to, sodium lauryl sulfate (available, for example, under the trade designation TEXAPON L-100 from Henkel Inc. (Wilmington, DE) and under the trade designation POLYSTEP B-3 from Stepan Chemical Co. (Northfield, IL)); sodium lauryl ether sulfate (available, for example, under the trade designation POLYSTEP B-12 from Stepan Chemical Co. (Northfield, IL)); ammonium lauryl sulfate (available, for example, under the trade designation STANDAPOL A from Henkel Inc. (Wilmington, DE)); and sodium dodecyl benzene sulfonate (available, for example, under the trade designation SIPONATE DS-10 from Rhone-Poulenc, Inc. (Cranberry, NJ)).

Other useful surfactants for use in the primer layer coating compositions are non-ionic surfactants. Suitable non-ionic surfactants include, but are not limited to, polyethoxylated alkyl alcohols (available, for example, under the trade designations BRIJ 30 and BRIJ 35 from ICI Americas, Inc. (Wilmington, DE) and under the trade designation TERGITOL TMN-6 from Dow Chemical (Midland, MI)); polyethoxylated alkyl phenols (available, for example, under the trade designations TRITON X-100 from Roche (Mannheim, Germany) and ICONOL NP-70 from BASF Corp. (Florham Park, NJ)); and polyethylene glycol/polypropylene glycol block copolymer (available, for example, under the trade designations TETRONIC 1502, TETRONIC 908, and PLURONIC F38 from BASF Corp. (Florham Park, NJ)).

The primer layer coating compositions are typically applied to the surface of the substrate using conventional techniques such as, for example, bar coating, roll coating, curtain coating, rotogravure coating, knife coating, spray coating, spin coating, or dip coating techniques. Coating techniques such as bar coating, roll coating, and knife coating are often used to adjust the thickness of the primer layer coating composition. The primer layer coating compositions can be coated on one or more sides of the substrate.

The optimal average dry coating thickness of the primer layer is dependent upon the particular primer layer coating composition used. In general, the average thickness of the dry primer layer coating is in the range of 100 to 10,000 angstroms (Å), in the range of 500 to 2500 Å, in the range of 750 to 2000 Å, or in the range of 1000 to 1500 Å. The thickness can be measured using an ellipsometer such as a Gaertner Scientific Corp. Model No. L115C. Although the actual coating thickness can vary considerably from one particular point to another, it is often desirable to apply the primer layer coating composition uniformly over the surface of the substrate. For example, to minimize visible interference color variations in the coating, it may be desirable to control the average coating thickness within 200 Å, within 150 Å, or within 100 Å across the substrate.

Once applied to the substrate, the coated primer layer coating composition is typically dried at temperatures in a range from 20°C to 150°C. An oven with circulating air or inert gas such as nitrogen is often used for drying purposes. The temperature may be increased further to speed the drying process, but care should be exercised to avoid damage to the substrate. For inorganic substrates, the drying temperature can be above 200°C. The dried primer layer refers to the primer layer remaining after the drying process.

The dried primer layer can contain some water such as the amount of water typically associated with equilibrium of the primer layer with the atmospheric moisture present in the environment of the primer layer. This equilibrium amount of water is typically no greater than 5 weight percent, no greater than 3 weight percent, no greater than 2 weight percent, no greater than 1 weight percent, or no greater than 0.5 weight percent based on a total weight of the dried primer layer.

The primer layer typically contains at least 60 weight percent, at least 65 weight percent, at least 70 weight percent, at least 75 weight percent, at least 80 weight percent, or at least 85 weight percent silica nanoparticles based on a total weight of the dried primer layer. The dried primer layer can contain up to 90 weight percent, up to 95 weight percent, or up to 99 percent or higher amounts of silica nanoparticles. For example, the dried primer layer can contain 60 to greater than 99 weight percent, 60 to 95 weight percent, 60 to 90 weight percent, 70 to 99 weight percent, 70 to 95 weight percent, 75 to 99 weight percent, 85 to 99 percent, 85 to 95 weight percent, 80 to 99 weight percent, or 85 to 95 weight percent silica nanoparticles.

For some uses, it may be desirable to maximize light transmission (i.e., minimize or eliminate reflection) and minimize reflection by the substrate. Stated differently, the primer layer can function as an anti-reflective layer. This can be accomplished by matching the refractive index of the primer layer as closely as possible with the square root of the refractive index of the substrate and by providing a primer layer thickness equal to one-fourth (1/4) of the optical wavelength of the incident light. The voids in the coating provide a multiplicity of sub-wavelength interstices between the silica nanoparticles where the refractive index (RI) abruptly changes from that of air (RI equal to 1) to that of the silica nanoparticles (RI is equal to 1.44). By adjusting the porosity, the refractive index of the primer layer can be altered as discussed in U.S. Patent No. 4,816,333 (Lange, et al.). If desired, the porosity can be altered to provide a primer layer having a refractive index very close to the square root of the refractive index of the substrate.

Dried primer layer coatings with porosity in the range of 25 to 45 volume percent or in the range of 30 to 40 volume percent often have a refractive index in the range of 1.2 to 1.4 or in the range of 1.25 to 1.36. If the refractive index is in one of these ranges, it tends to be approximately equal to the square root of the refractive indices of a polyester, polycarbonate, or poly(methyl methacrylate) substrate. For example, a primer layer coating having a refractive index of 1.25 to 1.36 is capable of providing an anti-reflective surface when coated on a polyethylene terephthalate substrate (RI equal to 1.64) at a thickness of 1000 to 2000 Å. If anti-reflection is not a needed characteristic of the coating, any desired thickness can be used. For example, the primer layer can have a thickness up to a few micrometers or mils (i.e., 1 mil is equal to 0.001 inches). The mechanical properties of the primer layer often improve as the thickness is increased.

In addition to the substrate and the primer layer, the articles contain a hydrophobic hydrocarbon layer that is attached to primer layer. More particularly, the hydrophobic hydrocarbon layer contains the reaction product of a silane compound with a surface of the acid-sintered silica nanoparticles in the primer layer. The silane compound contains both a reactive silyl group and a hydrophobic hydrocarbon group. The reactive silyl group has at least one hydroxyl group or hydrolyzable group that can react with the acid-sintered silica nanoparticles. The hydrophobic hydrocarbon group typically contains an alkyl, alkylene, aryl, arylene, or combination thereof.

In many embodiments, the silane compound used to form the hydrophobic layer is of Formula (I).

R¹-[Si(R²)₃₋ₓ(R³)ₓ]_{y} (I)

In Formula (I), group R¹ is an alkyl, alkylene, aryl, arylene, or combination thereof. Each R² is independently hydroxyl or a hydrolyzable group. Each R³ is independently a non-hydrolyzable group. Each variable x is an integer equal to 0, 1, or 2. The variable y is an integer equal to 1 or 2.

If the variable y in Formula (I) is equal to 1, group R¹ is monovalent and Formula (I) is equal to Formula (Ia).

R¹-Si(R²)₃₋ₓ(R³)ₓ (Ia)

Suitable monovalent R¹ groups are often alkyl or aryl. Either of these groups can be further combined with a divalent group selected from alkylene, arylene, or a combination thereof.

If the variable y in Formula (I) is equal to 2, group R¹ is divalent and Formula (I) is equal to Formula (Ib).

(R³)ₓ(R²)₃₋ₓSi-R¹-Si(R²)₃₋ₓ(R³)ₓ (Ib)

Suitable divalent groups include alkylene, arylene, or a combination thereof.

Suitable alkyl and alkylene R¹ groups have at least 1 carbon atom, at least 2 carbon atoms, at least 3 carbon atoms, at least 4 carbon atoms, or at least 5 carbon atoms and can have, for example, up to 30 carbon atoms, up to 25 carbon atoms, up to 20 carbon atoms, up to 15 carbon atoms, or up to 10 carbon atoms. Suitable aryl and arylene R¹ groups often have 6 to 18 carbon atoms, 6 to 12 carbon atoms, or 6 to 10 carbon atoms. Some example aryl groups are phenyl, diphenyl, and naphthyl. Some example arylene groups are phenylene, diphenylene, and naphthylene.

Each silane compound has at least one group of formula -Si(R²)₃₋ₓ(R³)ₓ. Each group R² is independently hydroxyl or a hydrolyzable group. Each group R³ is independently a non-hydrolyzable group. The variable x is an integer equal to 0, 1, or 2. The silane compound has a single silyl group if R¹ is monovalent and two silyl groups if R¹ is divalent.

In each group of formula -Si(R²)₃₋ₓ(R³)ₓ, there can be one, two, or three R² groups. The R² group is the reaction site for reaction with the acid-sintered silica nanoparticles included in the primer layer. That is, the hydrolyzable group or hydroxyl group reacts with the surface of the acid-sintered silica nanoparticles to covalently attach the silane compound to the primer layer resulting in the formation of a -Si-O-Si- bond. Suitable hydrolyzable R² groups include, for example, alkoxy, aryloxy, aralkyloxy, acyloxy, or halo groups. Suitable alkoxy groups often have 1 to 10 carbon atoms, 1 to 6 carbon atoms, 1 to 4 carbon atoms, or 1 to 3 carbon atoms. Suitable aryloxy groups often have 6 to 12 carbon atoms or 6 to 10 carbon atoms such as, for example, phenoxy. Suitable aralkyloxy group often have an alkoxy group with 1 to 10 carbon atoms, 1 to 6 carbon atoms, or 1 to 4 carbon atoms and an aryl group with 6 to 12 carbon atoms or 6 to 10 carbon atoms. An example aralkyloxy group has an alkoxy group with 1 to 4 carbon atoms with a phenyl group covalently attached to the alkoxy group. Suitable halo groups can be chloro, bromo, or iodo but are often chloro. Suitable acyloxy groups are of formula -O(CO)R^{b} where R^{b} is alkyl, aryl, or aralkyl. Suitable alkyl R^{b} groups often have 1 to 10 carbon atoms, 1 to 6 carbon atoms, or 1 to 4 carbon atoms. Suitable aryl R^{b} groups often have 6 to 12 carbon atoms or 6 to 10 carbon atoms such as, for example, phenyl. Suitable aralkyl R^{b} groups often have an alkyl group with 1 to 10 carbon atoms, 1 to 6 carbon atoms, or 1 to 4 carbon atoms that is substituted with an aryl having 6 to 12 carbon atoms or 6 to 10 carbon atoms such as, for example, phenyl. When there are multiple R² groups, they can be the same or different. In many embodiments, each R² is an alkoxy group or chloro.

If there are fewer than three R² group in each group of formula -C(R¹)₂-Si(R²)₃₋ₓ(R³)ₓ, there is at least one R³ group. The R³ group is a non-hydrolyzable group. Many non-hydrolyzable groups are alkyl, aryl, and aralkyl groups. Suitable alkyl groups include those having 1 to 10 carbon atoms, 1 to 6 carbon atoms, or 1 to 4 carbon atoms. Suitable aryl groups often have 6 to 12 carbon atoms or 6 to 10 carbon atoms such as, for example, phenyl or biphenyl. Suitable aralkyl groups often have an alkyl group with 1 to 10 carbon atoms, 1 to 6 carbon atoms, or 1 to 4 carbon atoms substituted with an aryl having 6 to 12 carbon atoms or 6 to 10 carbon atoms such as, for example, phenyl. When there are multiple R³ groups, these groups can be the same or different. In many embodiments, each R³ is an alkyl group.

Suitable silane compounds are commercially available from a variety of vendors. Example silane compounds that contain an alkyl group include, but are not limited to, C₁₀H₂₁-Si(OC₂H₅)₃, C₁₈H₃₇-Si(OC₂H₅)₃, C₁₈H₃₇-Si(Cl)₃, C₈H₁₇-Si(Cl)₃, and CH₃-Si(Cl)₃. Example silane compounds that contain an alkylene group include, but are not limited to,

(CH₃O)₃Si-C₈H₁₆-Si(OCH₃)₃, (C₂H₅O)₃Si-C₂H₄-Si(OC₂H₅)₃,

and (CH₃O)₃Si-CH₂CH(C₈H₁₇)-Si(OCH₃)₃. Example silanes that contain an aryl group include, but are not limited to, C₆H₅-Si(OCH₃)₃, C₆H₅-Si(Cl)₃, and C₁₀H₇-Si(OC₂H₅)₃. Example silane compounds that contain an arylene group (e.g., an arylene plus alkylene group) include, but are not limited to, (CH₃O)₃SiC₂H₄-C₆H₄-C₂H₄-Si(OCH₃)₃.

The silane compounds often can be used in neat form (e.g., the silane compounds can be applied by chemical vapor deposition) in the surface treatment of (i.e., in the reaction with) the primer layer. Alternatively, the silane compounds can be mixed with one or more organic solvents and/or one or more other optional compounds. The composition containing the silane compound that is applied to the surface of the primer layer is referred to as a "hydrocarbon layer coating composition". The hydrocarbon layer coating composition is used to form the hydrophobic hydrocarbon layer.

Suitable organic solvents for use in the hydrocarbon layer coating composition include, but are not limited to, aliphatic alcohols such as, for example, methanol, ethanol, and isopropanol; ketones such as, for example, acetone and methyl ethyl ketone; esters such as, for example, ethyl acetate and methyl formate; ethers such as, for example, diethyl ether, diisopropyl ether, methyl t-butyl ether, and dipropylene glycol monomethyl ether (DPM); alkanes such as, for example, heptane, decane, and other paraffinic (i.e., oleofinic) solvents; perfluorinated hydrocarbons such as, for example, perfluorohexane and perfluorooctane; fluorinated hydrocarbons such as, for example, pentafluorobutane; hydrofluoroethers such as, for example, methyl perfluorobutyl ether and ethyl perfluorobutyl ether; and the like; and combinations thereof. Preferred solvents often include aliphatic alcohols, perfluorinated hydrocarbons, fluorinated hydrocarbons, hydrofluoroethers, or combinations thereof. In some embodiments, the surface treatment composition contains aliphatic alcohols, hydrofluoroethers, or combinations thereof. In other embodiments, the hydrocarbon layer coating composition contains hydrofluoroethers or combinations thereof.

Some suitable fluorinated solvents that are commercially available include, for example, those commercially available from 3M Company (Saint Paul, MN) under the trade designation 3M NOVEC ENGINEERED FLUID (e.g., 3M NOVEC ENGINEERED FLUID 7100, 7200DL, and 7500).

If an organic solvent is used, the hydrocarbon layer coating compositions often contain an amount of the organic solvent that can dissolve or suspend at least about 0.01 percent by weight of the silane compound based on a total weight of the hydrocarbon layer coating composition. In some embodiments, it can be desirable that the organic solvent or mixture of organic solvents have water solubility equal to at least about 0.1 percent by weight, and for certain of these embodiments, acid solubility equal to at least about 0.01 weight percent.

When an organic solvent is used, useful concentrations of the silane compound in the hydrocarbon layer coating composition can vary over a wide range. For example, the hydrocarbon layer coating composition can include at least 0.01 weight percent, at least 0.1 weight percent, at least 1 weight percent, at least 5 weight percent, at least 10 weight percent, at least 25 weight percent, at least 50 weight percent, at least 75 weight percent, at least 80 weight percent, at least 85 weight percent, at least 90 weight percent, or at least 95 weight percent silane compound based on a total weight of the hydrocarbon layer coating composition. The amount often depends on the viscosity of the silane compound, the application method utilized, the nature of the substrate, and the desired surface characteristics.

The hydrocarbon layer coating composition can include other optional compounds. For example, a crosslinker can be added. The crosslinker is typically added when there are multiple silyl groups on the silane compound of Formula (I). The crosslinker can react with any reactive silyl groups of the silane compound that have not reacted with a surface of the primer layer. Any crosslinker that can react with the silane compounds can be used. The crosslinker can react, for example, with multiple silane compounds having any remaining reactive silyl groups. Alternatively, a first group of the crosslinker can react with the surface of an acid-sintered silica nanoparticle and a second group of the crosslinker can react with a silane compound to covalently attach the silane compound to the primer layer. In this alternative reaction, the crosslinker functions as a linker between the silane compound and the primer layer.

Some crosslinkers have multiple reactive silyl groups. These crosslinkers can be polymers with multiple reactive silyl groups. Alternatively, these crosslinkers can be of Formula (II).

Si(R⁵)_{4-d}(R⁶)_{d} (II)

In Formula (II), each R⁵ group is independently hydroxyl or a hydrolyzable group and each R⁶ group is independently a non-hydrolyzable group. The variable d in Formula (II) is an integer equal to 0, 1, 2, or 3.

Each R⁵ group in Formula (II) is a hydrolyzable group or hydroxyl group. This group can react with an unreacted reactive silyl group in a silane compound. Reacting multiple such R⁵ groups with multiple silane compounds can result in the crosslinking of the silane compounds. Suitable hydrolyzable R⁵ groups include, for example, alkoxy, aryloxy, aralkyloxy, acyloxy, or halo groups. Suitable alkoxy groups often have 1 to 10 carbon atoms, 1 to 6 carbon atoms, 1 to 4 carbon atoms, or 1 to 3 carbon atoms. Suitable aryloxy groups often have 6 to 12 carbon atoms or 6 to 10 carbon atoms such as, for example, phenoxy. Suitable aralkyloxy groups often have an alkoxy group with 1 to 10 carbon atoms, 1 to 6 carbon atoms, or 1 to 4 carbon atoms that is substituted with an aryl group with 6 to 12 carbon atoms or 6 to 10 carbon atoms. An example aralkyloxy group has an alkoxy group with 1 to 4 carbon atoms with a phenyl group covalently attached to the alkoxy group. Suitable halo groups can be chloro, bromo, or iodo but are often chloro. Suitable acyloxy groups are of formula -O(CO)R^{b} where R^{b} is alkyl, aryl, or aralkyl. Suitable alkyl R^{b} groups often have 1 to 10 carbon atoms, 1 to 6 carbon atoms, or 1 to 4 carbon atoms. Suitable aryl R^{b} groups often have 6 to 12 carbon atoms or 6 to 10 carbon atoms such as, for example, phenyl. Suitable aralkyl R^{b} groups often have an alkyl group with 1 to 10 carbon atoms, 1 to 6 carbon atoms, or 1 to 4 carbon atoms that is substituted with an aryl having 6 to 12 carbon atoms or 6 to 10 carbon atoms such as, for example, phenyl. When there are multiple R⁵ or R⁸ groups, these groups can be the same or different. In many embodiments, each R⁵ or R⁸ is an alkoxy group.

Each R⁶ group in Formula (II) is a non-hydrolyzable group. Many non-hydrolyzable groups are to alkyl, aryl, and aralkyl groups. Suitable alkyl groups include those having 1 to 10 carbon atoms, 1 to 6 carbon atoms, or 1 to 4 carbon atoms. Suitable aryl groups often have 6 to 12 carbon atoms or 6 to 10 carbon atoms such as, for example, phenyl or biphenyl. Suitable aralkyl groups often have an alkyl group with 1 to 10 carbon atoms, 1 to 6 carbon atoms, or 1 to 4 carbon atoms substituted with an aryl having 6 to 12 carbon atoms or 6 to 10 carbon atoms such as, for example, phenyl. When there are multiple R⁶ groups, they can be the same or different. In many embodiments, each R⁶ is an alkyl group.

Example crosslinkers include, but are not limited to, tetraalkoxysilanes such as tetraethoxysilane (TEOS), bis(triethoxysilyl)ethane, and poly(diethoxysilane).

The amount of crosslinker included in the hydrocarbon layer coating composition can be any suitable amount depending, for example, on the particular application and the desired properties. In many embodiments, the hydrocarbon layer coating composition can include up to 75 weight percent, up to 70 weight percent, up to 60 weight percent, up to 50 weight percent, up to 40 weight percent, up to 30 weight percent, up to 20 weight percent, or up to 10 weight percent of the crosslinker based on a total weight of the hydrocarbon layer coating composition. For example, the crosslinker can be in the range of 1 to 75 weight percent, 1 to 70 weight percent, 1 to 60 weight percent, 1 to 50 weight percent, 1 to 40 weight percent, 1 to 30 weight percent, 1 to 20 weight percent, or 1 to 10 weight percent.

Minor amounts of other optional components can be added to the hydrocarbon layer coating composition that may impart desirable properties, that may be desirable for particular curing methods or conditions, or that may be desirable for particular surface treatment applications. Examples of other optional components include, but are not limited to, catalysts (including the moisture curing catalysts described below), initiators, surfactants, stabilizers, anti-oxidants, flame retardants, ultraviolet (UV) absorbers, radical quenchers, and the like, and mixtures thereof.

In a second aspect, a method of making an article is provided. The method includes providing a substrate and forming a primer layer on a surface of the substrate. The primer layer contains a plurality of acid-sintered silica nanoparticles arranged to form a continuous three-dimensional porous network. The method further includes attaching a hydrophobic hydrocarbon layer to the primer layer by reacting a surface of the acid-sintered silica nanoparticles in the primer layer with a silane compound. The silane compound contains both a reactive silyl group and a hydrophobic hydrocarbon group. In many embodiments, the silane compound used to form the hydrophobic layer is of Formula (I).

The silane compound compounds react with a surface of the acid-sintered silica nanoparticles included in the primer layer to form a -Si-O-Si- bond between the primer layer and the hydrophobic hydrocarbon layer. The resulting hydrophobic hydrocarbon layer is attached to the substrate through the primer layer. The combination of the primer layer and the hydrophobic hydrocarbon layer can be used to impart a degree of hydrophobicity and/or oleophobicity to a variety of substrates or to further enhance the hydrophobicity and/or oleophobicity of a variety of substrates.

The silane compound in applied to the primer layer as a hydrocarbon layer coating composition. The hydrocarbon layer coating composition can be applied to the primer layer using any suitable application method. The application method often involves forming a coating layer by dip coating, spin coating, spray coating, wiping, roll coating, brushing, spreading, flow coating, vapor deposition, or the like, or combinations thereof.

Typically, the hydrocarbon layer coating composition can be applied to the primer layer on the substrate such that after curing, a hydrophobic hydrocarbon layer is formed over the primer layer. That is, the primer layer is positioned between the substrate and the hydrophobic hydrocarbon layer. The hydrophobic layer can be a monolayer or more in thickness. The thickness of the hydrophobic layer, for example, can be in the range of 0.001 to 1 micrometer, in the range of 0.001 to 0.10 micrometers, or in the range of 0.01 to 0.1 micrometers.

After application to the primer layer, the hydrocarbon layer coating composition can be cured by exposure to heat and/or moisture. Curing attaches the silane compound to the primer layer. Curing results in the formation of the -Si-O-Si- bond between the silane compound and the acid-sintered silica nanoparticles in the primer layer. If a crosslinker is included in the hydrocarbon layer coating composition, these materials can react with any remaining reactive silyl groups on the silane compound. Moisture cure can be affected at temperatures ranging from room temperature (for example, 20°C to 25°C) up to about 80°C or more. Moisture curing times can range from a few minutes (for example, at the higher temperatures such as 80°C or higher) to hours (for example, at the lower temperatures such as at or near room temperature).

For the attachment of the silane compound to the primer layer, sufficient water typically can be present to cause hydrolysis of the hydrolyzable groups described above, so that condensation to form -Si-O-Si- groups can occur (and thereby curing can be achieved). The water can be, for example, present in the hydrocarbon layer coating composition, adsorbed on the substrate surface, or in the ambient atmosphere. Typically, sufficient water can be present if the coating method is carried out at room temperature in an atmosphere containing water (for example, an atmosphere having a relative humidity of about 30 percent to about 50 percent). The silane compound can undergo chemical reaction with the surface of the acid-sintered silica nanoparticles in the primer layer to form a hydrophobic hydrocarbon layer through the formation of covalent bonds (including bonds in -Si-O-Si- groups).

In some embodiments, a moisture curing catalyst is used. Suitable moisture curing catalysts are well-known in the art and include, for example, ammonia, N-heterocyclic compounds, monoalkylamines, dialkylamines, or trialkylamines, organic or inorganic acids, metal carboxylates, metal acetylacetonate complexes, metal powders, peroxides, metal chlorides, organometallic compounds, and the like, and combinations thereof. When used, the moisture curing catalysts can be present in amounts in a range of 0.1 to 10 weight percent, in a range of 0.1 to about 5 weight percent, or in a range of 0.1 to about 2 weight percent based on a total weight of the hydrocarbon layer coating composition.

Example N-heterocyclic compounds that can function as moisture curing catalysts include, but are not limited to, 1-methylpiperazine, 1-methylpiperidine, 4,4'-trimethylenedipiperidine, 4,4'-trimethylene-bis(1-methylpiperidine), diazobicyclo[2.2.2]octane, cis-2,6-dimethylpiperazine, and the like, and combinations thereof.

Example monoalkylamines, dialkylamines, and trialkylamines that can function as moisture curing catalysts include, but are not limited to, methylamine, dimethylamine, trimethylamine, phenylamine, diphenylamine, triphenylamine, DBU (that is, 1,8-diazabicyclo[5.4.0]-7-undecene), DBN (that is, 1,5-diazabicyclo[4.3.0]-5-nonene), 1,5,9-triazacyclododecane, 1,4,7-triazacyclononane, and the like, and combinations thereof.

Example organic or inorganic acids that can function as moisture curing catalysts include, but are not limited to, acetic acid, formic acid, triflic acid, perfluorobutyric acid, propionic acid, butyric acid, valeric acid, maleic acid, stearic acid, citric acid, hydrochloric acid, nitric acid, sulfuric acid, phosphoric acid, chloric acid, hypochlorous acid, and the like, and combinations thereof.

The hydrocarbon layer coating composition is typically applied to the primer layer at room temperature (typically in a range of 15°C to 30°C or in a range of 20°C to 25°C). Alternatively, the hydrocarbon layer coating composition can be applied to the primer layer that has been preheated at an elevated temperature such as, for example, in a range of 40°C to 200°C, in a range of 50°C to 175°C, or in a range of 60°C to 150°C. Following application of the hydrocarbon layer coating composition, the resulting coating can be dried and then cured at ambient temperature (for example, in the range of 15°C to 30°C or in the range of 20°C to 25°C) or at an elevated temperature (for example, in the range of 40°C to 200°C, in the range of 50°C to 175°C, or in the range of 50°C to 100°C) for a time sufficient for the curing to take place.

The resulting articles have a hydrophobic coating. The contact angle for water is often equal to at least 85 degrees, at least 90 degrees, at least 95 degrees, at least 100 degrees, at least 105 degrees, at least 110 degrees, or at least 115 degrees.

The hydrophobic character of the coating can be varied by selection of the size of the silica nanoparticles used to form the primer layer and by selection of the specific silane compound that is used to form the hydrophobic hydrocarbon layer. For example, the hydrophobic character can often be increased by preparing a rougher primer layer surface. A rougher surface tends to result from a mixture of silica nanoparticles with different sizes, shapes, or a mixture thereof. Additionally, the hydrophobic character can often be further enhanced by selection of a silane compound. A more hydrophobic hydrocarbon group can be used to increase the hydrophobic character of the resulting article.

The silane compounds are covalently bonded to the primer layer through a -Si-O-Si- bond. The use of the primer layer allows attachment of silane compounds to substrates that normally would not be compatible with silane compounds (i.e., substrates that are not capable of forming a -Si-O-Si- bond with the silane compounds). Coatings based on silane compounds can be extended beyond substrates such as glass and ceramic materials with hydroxyl groups on the surface. More specifically, the silane compounds can be attached through the primer layer to surfaces such as various metals (e.g., aluminum and stainless steel) and various polymeric materials (e.g., polycarbonate, poly(methyl methacrylate), ABS, and the like) that do not have surface groups capable of reacting with the silane compounds. The coatings tend to provide a surface that is easy to clean, smudge resistant, and fingerprint resistant.

Various items are provided that are articles or methods of making articles.

Item 1 is an article that includes (a) a substrate, (b) a primer layer attached to a surface of the substrate, and (c) a hydrophobic hydrocarbon layer attached to the primer layer. The primer layer comprising a plurality of acid-sintered silica nanoparticles arranged to form a three-continuous dimensional porous network. The hydrophobic hydrocarbon layer comprising a reaction product of a silane compound with a surface of the acid-sintered silica nanoparticles in the primer layer, wherein the silane compound has at least one reactive silyl group and a hydrophobic hydrocarbon group.

Item 2 is an article of Item 1, wherein the silane compound is of Formula (I).

R¹-[Si(R²)₃₋ₓ(R³)ₓ]_{y} (I)

In Formula (I), group R¹ is an alkyl, alkylene, aryl, arylene, or combination thereof. Each R² is independently hydroxyl or a hydrolyzable group. Each R³ is independently a non-hydrolyzable group. Each variable x is an integer equal to 0, 1, or 2. Each variable y is an integer equal to 1 or 2.

Item 3 is an article of item 1 or 2, wherein the reaction product is crosslinked.

Item 4 is an article of any one of items 1 to 3, wherein the substrate is a polymeric material or a metal.

Item 5 is an article of any one of items 1 to 4, wherein the silica nanoparticles are a mixture of spherical and acicular nanoparticles.

Item 6 is an article of any one of items 1 to 5, wherein the primer layer comprises a reaction product of silica nanoparticles and a crosslinking agent having at least two reactive silyl groups.

Item 7 is an article of any one of items 1 to 6, wherein the primer layer is formed from a silica sol acidified to a pH in a range of 2 to 5 with an acid having a pKa less than 3.5.

Item 8 is an article of any one of items 1 to 7, wherein the article is anti-reflective.

Item 9 is an article of any one of items 1 to 8, wherein the hydrolyzable group is alkoxy, aryloxy, aralkyloxy, acyloxy, or halo and wherein the non-hydrolyzable group is alkyl, aryl, and aralkyl.

Item 10 is a method of making an article. The method includes providing a substrate and forming a primer layer on a surface of the substrate. The primer layer comprises a plurality of acid-sintered silica nanoparticles arranged to form a continuous three-dimensional porous network. The method further includes attaching a hydrophobic hydrocarbon layer to the primer layer by reacting a surface of the acid-sintered silica nanoparticles in the primer layer with a silane compound having at least one reactive silyl group and a hydrophobic hydrocarbon group.

Item 11 is a method of item 10, wherein the silane compound is of Formula (I).

R¹-[Si(R²)₃₋ₓ(R³)ₓ]_{y} (I)

In Formula (I), group R¹ is an alkyl, alkylene, aryl, arylene, or combination thereof. Each R² is independently hydroxyl or a hydrolyzable group. Each R³ is independently a non-hydrolyzable group. Each variable x is an integer equal to 0, 1, or 2. Each variable y is an integer equal to 1 or 2.

Item 12 is a method of item 10 or 11, wherein forming the primer layer comprises forming a primer layer coating composition comprising a silica sol acidified to a pH in a range of 2 to 5 with an acid having a pKa less than 3.5; and applying the primer layer coating composition to a surface of the substrate.

Item 13 is a method of any one of items 10 to 12, wherein attaching a hydrophobic hydrocarbon layer to the primer layer comprises forming a hydrocarbon coating layer composition comprising the silane compound; and applying the hydrocarbon coating layer composition to a surface of the primer layer.

Item 14 is a method of item 12, wherein the primer layer coating composition further comprises a silane coupling agent.

Item 15 is a method of item 13 or 14, wherein the hydrocarbon coating layer composition further comprises a crosslinker.

### Examples

Objects and advantages of this invention are further illustrated by the following examples, but the particular materials and amounts thereof recited in these examples, as well as other conditions and details, should not be construed to unduly limit this invention. These examples are for illustrative purposes only and are not meant to be limiting on the scope of the appended claims.

### Glossary of Materials

"SNOWTEX ST-UP" refers to an aqueous colloidal non-spherical silica dispersion with 21.2 weight percent solids (nominally 21 weight percent solids) that is commercially available from Nissan Chemical Company (Houston, TX). The average particle size has a an average width of approximately 9-15 nanometers and an average length of approximately 80-150 nanometers.

"SILCO LI-518" refers to an aqueous colloidal spherical silica dispersion with 18.8 weight percent solids (nominally 18 weight percent solids) that is commercially available from Silco International Inc (Portland, OR). The average particle size is approximately 5 nanometers.

"NALCO 1050" refers to an aqueous colloidal spherical silica dispersion with 50.4 weight percent solids (nominally 50 weight percent solids) that is commercially available from NALCO Chemical Company (Naperville, IL). The average particle size is approximately 20 nanometers.

"3M NOVEC ENGINEERED FLUID 7200DL" refers to a hydrofluoroether solvent that is commercially available from 3M Company (Saint Paul, MN).

Phenyltrichlorosilane is a hydrocarbon silane that was obtained from Gelest, Inc. (Morrisville, PA).

Methyltrichlorosilane is a hydrocarbon silane that was obtained from Sigma-Aldrich (St. Louis, MO).

Octyltrichlorosilane is a hydrocarbon silane that was obtained from Alfa Aesar (Ward Hill, MA).

Octadecyltrichlorosilane is a hydrocarbon silane that was obtained from Alfa Aesar (Ward Hill, MA).

All solvents were standard reagent grade obtained from commercial sources and were used without further purification unless specified otherwise.

The glass plates were obtained from VWR International, West Chester, PA.

The stainless steel panel was polished stainless steel (304) that was obtained from North American Stainless, Ghent, KY.

PET refers to polyethylene terephthalate film was SCOTHPAR POLYESTER obtained from 3M Company, St. Paul, MN. The thickness was 50 micrometers.

### Test Methods

### Method for Measuring Contact Angles

The coated substrate samples prepared as described in the following examples and comparative examples were rinsed for 1 minute by hand agitation in isopropyl alcohol (IPA). The IPA was allowed to evaporate before measuring water (H₂O) contact angles (using water as the wetting liquid).

Measurements of water contact angles were made using deionized water filtered through a filtration system (obtained from Millipore Corporation of Billerica, MA) on a video contact angle analyzer (available as product number VCA-2500XE from AST Products of Billerica, MA). Reported values are the averages of measurements on at least three drops measured on the right and left sides of the drops. Drop volumes were 1 microliter for static contact angle measurements and 1-3 microliters for advancing and receding contact angle measurements.

A similar process was used for measuring hexadecane (HD) contact angles.

### Primer Layer Coating Composition 1 (PLC1)

The colloidal silica dispersions SNOWTEX ST-UP and SILCO LI-518 were mixed in a 7:3 ratio (w/w) based on weight, diluted to 3 weight percent solids with water, and acidified with 3 M HNO₃ to a pH of 2.

### Primer Layer Coating Composition 2 (PLC2)

The colloidal silica dispersions SNOWTEX ST-UP and SILCO LI-518 were mixed in a 7:3 ratio (w/w) based on weight, diluted to 5 weight percent solids with water, and acidified with 3 M HNO₃ to a pH of 2.

### Primer Layer Coating Composition 3 (PLC3)

The colloidal silica dispersion NALCO 1050 was diluted to 2.5 weight percent solids with water and acidified with 3 M HNO₃ to a pH of 2.5. Figure 1A is the transmission electron micrograph of a primer layer formed without the addition of acid. Figure 1B is the transmission electron micrograph of a primer layer formed after the addition of acid.

### Hydrocarbon Layer Coating Composition 1 (HLC1)

Phenyltrichlorosilane was diluted with 3M NOVEC ENGINEERED FLUID 7200DL to prepare a 0.2 weight percent solution of hydrocarbon silane.

### Hydrocarbon Layer Coating Composition 2 (HLC2)

Methyltrichlorosilane was diluted with 3M NOVEC ENGINEERED FLUID 7200DL to prepare a 0.2 weight percent solution of hydrocarbon silane.

### Hydrocarbon Layer Coating Composition 3 (HLC3)

Octyltrichlorosilane was diluted with 3M NOVEC ENGINEERED FLUID 7200DL to prepare a 0.2 weight percent solution of hydrocarbon silane.

### Hydrocarbon Layer Coating Composition 4 (HLC4)

Octadecyltrichlorosilane was diluted with 3M NOVEC ENGINEERED FLUID 7200DL to prepare a 0.2 weight percent solution of hydrocarbon silane.

### Examples 1-6 and Comparative Example A

For each of Examples 1 to 4, a separate glass plate having dimensions of 2.5 cm by 7.5 cm was cleaned with a slurry of ALCONOX powder. Afterwards, the glass plates were rinsed with deionized water and dried under a stream of nitrogen gas. Each glass plate was immersed in a primer layer coating composition (PLC1) at a rate of 40 centimeters per minute (cm/min), held in the primer layer coating composition for 60 seconds, and removed from primer layer coating composition at a rate of 40 cm/min. Each primer layer coating composition was dried at room temperature and then heated at 120°C for 10 minutes to prepare the primer layer coating. Each sample was subsequently dipped into a hydrocarbon layer coating composition (HLC1- HLC4 as indicated in Table 1), held in the hydrocarbon layer coating composition for 5 minutes, and then removed from the hydrophobic coating layer composition. Each sample was then dried at room temperature for 10 minutes before rinsing with methanol. After the samples were dried again at room temperature, they were treated with a final heat treatment at 120°C for 15 minutes.

For Comparative Examples A-D, glass plates were cleaned as described above for Examples 1-4. The glass plates were not dipped in a primer layer coating composition but only in a hydrocarbon layer coating composition (HLC1- HLC4 as indicated in Table 1). The hydrocarbon layer coating compositions were applied as described for Examples 1-4.

For examples 5-8 PET film was coated with primer layer coating composition (PLC2) using a gravure roll coater (#110 roll), 10 feet per minute line speed, ovens set at 120°C. The oven was approximately 10 feet long. The primed PET was cut into pieces with dimensions of 5.0 cm by 10 cm. Each sample was subsequently dipped into hydrocarbon layer coating composition (HLC1- HLC4 as shown in Table 1), held in the hydrocarbon layer coating composition for 5 minutes, and then removed from the hydrophobic coating layer composition. Each sample was then dried at room temperature for 10 minutes before rinsing with methanol. After the samples were dried again at room temperature, they were treated with a final heat treatment at 120°C for 15 minutes.

For Example 9, a stainless steel panel having dimensions of 5 cm by 10 cm was cleaned with a slurry of ALCONOX powder. The cleaned stainless steel panel were rinsed with deionized water and dried under a stream of nitrogen gas. The stainless steel panel was immersed in a primer layer coating composition (PLC1) at a rate of 40 centimeters per minute (cm/min), held in the primer layer coating composition for 60 seconds, and removed from primer layer coating composition at a rate of 40 cm/min rate. The primer layer coating was dried at room temperature and then heated at 120°C for 10 minutes. The primed sample was subsequently dipped into hydrocarbon layer coating composition 3 (HLC3), held in the hydrocarbon coating layer coating composition for 5 minutes, and removed using the same conditions used for the primer layer coating composition. The sample was then dried at room temperature for 10 minutes before rinsing with methanol. The sample was dried again at room temperature and then treated with a final heat treatment at 120°C for 15 minutes.

The static, advancing (adv.), and receding (rec.) water (H₂O) contact angles for Examples 1-9 and Comparative Example A-D were measured using the measurement method described above. The results are summarized below in Table 1.

**Table 1: Examples 1-6 and Comparative Example A**

| Example | Substrate | Primer Layer Coating Composition | Hydrocarbon Layer Coating Composition | H₂O Contact Angle, degrees | | |
|---|---|---|---|---|---|---|
| | | | | Static | Adv. | Rec. |
| 1 | Glass | PLC1 | HLC1 | 96 | 101 | 47 |
| 2 | Glass | PLC1 | HLC2 | 138 | 140 | 43 |
| 3 | Glass | PLC1 | HLC3 | 119 | 124 | 101 |
| 4 | Glass | PLC1 | HLC4 | 114 | 121 | 109 |
| 5 | PET | PLC2 | HLC1 | 90 | 102 | 53 |
| 6 | PET | PLC2 | HLC2 | 138 | 144 | 48 |
| 7 | PET | PLC2 | HLC3 | 119 | 122 | 96 |
| 8 | PET | PLC2 | HLC4 | 117 | 123 | 107 |
| 9 | SS | PLC1 | HLC3 | 123 | 127 | 87 |
| Comp. A | Glass | None | HLC1 | 76 | 86 | 75 |
| Comp. B | Glass | None | HLC2 | 78 | 86 | 66 |
| Comp. C | Glass | None | HLC3 | 107 | 115 | 88 |
| Comp. D | Glass | None | HLC4 | 115 | 120 | 108 |

## Claims

1. An article comprising:
(a) a substrate:
(b) a primer layer attached to a surface of the substrate, the primer layer comprising a plurality of acid-sintered silica nanoparticles arranged to form a continuous three- dimensional porous network, wherein the primer layer is formed from a primer layer coating composition comprising a silica sol acidified with an acid having a pKa less than 3.5 to a pH in a range of 2 to 5; and
(c) a hydrophobic hydrocarbon layer attached to the primer layer, the hydrophobic hydrocarbon layer comprising a reaction product of a silane compound with a surface of the acid-sintered silica nanoparticles in the primer layer, wherein the silane compound has at least one reactive silyl group and a hydrophobic hydrocarbon group.

2. The article of claim 1, wherein the silane compound is of Formula (I)
R¹-[Si(R²)₃₋ₓ(R³)ₓ]_{y} (I)
wherein
R¹ is an alkyl, alkylene, aryl, arylene, or combination thereof;
each R² is independently hydroxyl or a hydrolyzable group;
each R³ is independently a non-hydrolyzable group;
each x is an integer equal to 0, 1, or 2; and
y is an integer equal to 1 or 2.

3. The article of claim 1 or 2, wherein the reaction product is crosslinked.

4. The article of any one of claims 1 to 3, wherein the substrate is a polymeric material or a metal.

5. The article of any one of claims 1 to 4, wherein the silica nanoparticles are a mixture of spherical and acicular nanoparticles.

6. The article of any one of claims 1 to 5, wherein the primer layer comprises a reaction product of silica nanoparticles and a crosslinking agent having at least two reactive silyl groups.

7. The article of any one of claims 1 to 6, wherein the primer layer is formed from a silica sol acidified to a pH in a range of 2 to 5 with an acid having a pKa less than 3.5.

8. The article of any one of claims 1 to 7, wherein the hydrolyzable group is alkoxy, aryloxy, aralkyloxy, acyloxy, or halo and wherein the non-hydrolyzable group is alkyl, aryl, and aralkyl.

9. The article of any one of claims 1 to 8, wherein the article is anti-reflective.

10. A method of making an article, the method comprising:
providing a substrate;
forming a primer layer on a surface of the substrate, the primer layer comprising a plurality of acid-sintered silica nanoparticles arranged to form a continuous three-dimensional porous network, wherein the primer layer is formed from a primer layer coating composition comprising a silica sol acidified with an acid having a pKa less than 3.5 to a pH in a range of 2 to 5; and
attaching a hydrophobic hydrocarbon layer to the primer layer by reacting a surface of the acid-sintered silica nanoparticles in the primer layer with a silane compound having at least one reactive silyl group and a hydrophobic hydrocarbon group.

11. The method of claim 10, wherein the silane compound is of Formula (I)
R¹-[Si(R²)₃₋ₓ(R³)ₓ]_{y} (I)
wherein
R¹ is an alkyl, alkylene, aryl, arylene, or combination thereof;
each R² is independently hydroxyl or a hydrolyzable group;
each R³ is independently a non-hydrolyzable group;
each x is an integer equal to 0, 1, or 2; and
y is an integer equal to 1 or 2.

12. The method of claim 10 or 11, wherein forming the primer layer comprises forming a primer layer coating composition comprising a silica sol acidified to a pH in a range of 2 to 5 with an acid having a pKa less than 3.5; and applying the primer layer coating composition to a surface of the substrate.

13. The method of any one of claims 10 to 12, wherein attaching a hydrophobic hydrocarbon layer to the primer layer comprises forming a hydrocarbon coating layer composition comprising the silane compound; and applying the hydrocarbon coating layer composition to a surface of the primer layer.

14. The method of claim 12, wherein the primer layer coating composition further comprises a silane coupling agent.

15. The method of claim 13 or 14, wherein the hydrocarbon coating layer composition further comprises a crosslinker.

## Patentansprüche

1. Gegenstand, umfassend:
(a) ein Substrat,
(b) eine Primerschicht, die an einer Oberfläche des Substrats angebracht ist, wobei die Primerschicht mehrere mit Säure gesinterte Siliciumdioxidnanoteilchen umfasst, die so angeordnet sind, dass sie ein durchgängiges dreidimensionales poröses Netz bilden, wobei die Primerschicht aus einer Primerschicht-Beschichtungszusammensetzung gebildet ist, die ein Kieselsol umfasst, das mit einer Säure, die einen pKₛ-Wert von weniger als 3,5 aufweist, auf einen pH-Wert in einem Bereich von 2 bis 5 angesäuert wurde; und
(c) eine hydrophobe Kohlenwasserstoffschicht, die an der Primerschicht angebracht ist, wobei die hydrophobe Kohlenwasserstoffschicht ein Reaktionsprodukt von einer Silanverbindung mit einer Oberfläche der mit Säure gesinterten Siliciumdioxidnanoteilchen in der Primerschicht umfasst, wobei die Silanverbindung mindestens eine reaktive Silylgruppe und eine hydrophobe Kohlenwasserstoffgruppe aufweist.

2. Gegenstand nach Anspruch 1, wobei die Silanverbindung eine Verbindung der Formel (I)
R¹-[Si(R²)₃₋ₓ(R³)ₓ]_{y} (I)
ist, worin
R¹ für ein Alkyl, Alkylen, Aryl, Arylen oder eine Kombination davon steht;
jedes R² unabhängig für Hydroxyl oder eine hydrolisierbare Gruppe steht;
jedes R³ unabhängig für eine nicht hydrolisierbare Gruppe steht;
jedes x eine ganze Zahl gleich 0, 1 oder 2 ist; und
y eine ganze Zahl gleich 1 oder 2 ist.

3. Gegenstand nach Anspruch 1 oder 2, wobei das Reaktionsprodukt vernetzt ist.

4. Gegenstand nach einem der Ansprüche 1 bis 3, wobei es sich bei dem Substrat um ein Polymermaterial oder ein Metall handelt.

5. Gegenstand nach einem der Ansprüche 1 bis 4, wobei es sich bei den Siliciumdioxidnanoteilchen um eine Mischung aus kugelförmigen und nadelförmigen Nanoteilchen handelt.

6. Gegenstand nach einem der Ansprüche 1 bis 5, wobei die Primerschicht ein Reaktionsprodukt von Siliciumdioxidnanoteilchen und einem Vernetzungsmittel mit mindestens zwei reaktiven Silylgruppen umfasst.

7. Gegenstand nach einem der Ansprüche 1 bis 6, wobei die Primerschicht aus einem Kieselsol gebildet ist, das mit einer Säure, die einen pKₛ-Wert von weniger als 3,5 aufweist, auf einen pH-Wert in einem Bereich von 2 bis 5 angesäuert wurde.

8. Gegenstand nach einem der Ansprüche 1 bis 7, wobei es sich bei der hydrolisierbaren Gruppe um Alkoxy, Aryloxy, Aralkyloxy, Acyloxy oder Halogen handelt und wobei es sich bei der nicht hydrolisierbaren Gruppe um Alkyl, Aryl und Aralkyl handelt.

9. Gegenstand nach einem der Ansprüche 1 bis 8, wobei der Gegenstand antireflektierend ist.

10. Verfahren zur Herstellung eines Gegenstands, wobei das Verfahren Folgendes umfasst:
Bereitstellen eines Substrats;
Bilden einer Primerschicht auf einer Oberfläche des Substrats, wobei die Primerschicht mehrere mit Säure gesinterte Siliciumdioxidnanoteilchen umfasst, die so angeordnet sind, dass sie ein durchgängiges dreidimensionales poröses Netz bilden, wobei die Primerschicht aus einer Primerschichtbeschichtungszusammensetzung gebildet ist, die ein Kieselsol umfasst, das mit einer Säure, die einen pKₛ-Wert von weniger als 3,5 aufweist, auf einen pH-Wert in einem Bereich von 2 bis 5 angesäuert wurde; und
Anbringen einer hydrophoben Kohlenwasserstoffschicht an der Primerschicht durch Umsetzen einer Oberfläche der mit Säure gesinterten Siliciumdioxidnanoteilchen in der Primerschicht mit einer Silanverbindung, die mindestens eine reaktive Silylgruppe und eine hydrophobe Kohlenwasserstoffgruppe aufweist.

11. Verfahren nach Anspruch 10, wobei die Silanverbindung eine Verbindung der Formel (I)
R¹-[Si(R²)₃₋ₓ(R³)ₓ]_{y} (I)
ist, worin
R¹ für ein Alkyl, Alkylen, Aryl, Arylen oder eine Kombination davon steht;
jedes R² unabhängig für Hydroxyl oder eine hydrolisierbare Gruppe steht;
jedes R³ unabhängig für eine nicht hydrolisierbare Gruppe steht;
jedes x eine ganze Zahl gleich 0, 1 oder 2 ist; und
y eine ganze Zahl gleich 1 oder 2 ist.

12. Verfahren nach Anspruch 10 oder 11, wobei das Bilden der Primerschicht das Bilden einer Primerschicht-Beschichtungszusammensetzung, die ein Kieselsol umfasst, das mit einer Säure, die einen pKₛ-Wert von weniger als 3,5 aufweist, auf einen pH-Wert in einem Bereich von 2 bis 5 angesäuert wurde; und das Aufbringen der Primerschicht-Beschichtungszusammensetzung auf eine Oberfläche des Substrats umfasst.

13. Verfahren nach einem der Ansprüche 10 bis 12, wobei das Anbringen einer hydrophoben Kohlenwasserstoffschicht an der Primerschicht das Bilden einer KohlenwasserstoffBeschichtungsschichtzusammensetzung, die die Silanverbindung umfasst; und das Aufbringen der Kohlenwasserstoffbeschichtungsschichtzusammensetzung auf eine Oberfläche der Primerschicht umfasst.

14. Verfahren nach Anspruch 12, wobei die Primerschicht-Beschichtungszusammensetzung ferner ein Silankopplungsmittel umfasst.

15. Verfahren nach Anspruch 13 oder 14, wobei die Kohlenwasserstoff-Beschichtungsschichtzusammensetzung ferner ein Vernetzungsmittel umfasst.

## Revendications

1. Article comprenant :
(a) un substrat :
(b) une couche d'apprêt fixée sur une surface du substrat, la couche d'apprêt comprenant une pluralité de nanoparticules de silice frittées à l'acide agencées afin de former un réseau poreux continu en trois dimensions, dans lequel la couche d'apprêt est formée à partir d'une composition de revêtement de couche d'apprêt comprenant un sol de silice acidifié avec un acide ayant un pKa inférieur à 3,5 à un pH compris dans une plage allant de 2 à 5 ; et
(c) une couche d'hydrocarbure hydrophobe fixée sur la couche d'apprêt, la couche d'hydrocarbure hydrophobe comprenant un produit de réaction d'un composé de silane avec une surface des nanoparticules de silice frittées à l'acide dans la couche d'apprêt, dans lequel le composé de silane présente au moins un groupe silyle réactif et un groupe hydrocarbure hydrophobe.

2. Article selon la revendication 1, dans lequel le composé de silane est de Formule (I)
R¹-[Si(R²)₃₋ₓ(R³)ₓ]_{y} (I)
dans laquelle
R¹ est un alkyle, un alkylène, un aryle, un arylène ou une combinaison de ceux-ci;
chaque R² est indépendamment un hydroxyle ou un groupe hydrolysable;
chaque R³ est indépendamment un groupe non hydrolysable;
chaque x est un nombre entier égal à 0, 1 ou 2 ; et
y est un nombre entier égal à 1 ou 2.

3. Article selon les revendications 1 ou 2, dans lequel le produit de réaction est réticulé.

4. Article selon l'une quelconque des revendications 1 à 3, dans lequel le substrat est un matériau polymère ou un métal.

5. Article selon l'une quelconque des revendications 1 à 4, dans lequel les nanoparticules de silice sont un mélange de nanoparticules sphériques et aciculaires.

6. Article selon l'une quelconque des revendications 1 à 5, dans lequel la couche d'apprêt comprend un produit de réaction de nanoparticules de silice et d'un agent de réticulation ayant au moins deux groupes silyle réactifs.

7. Article selon l'une quelconque des revendications 1 à 6, dans lequel la couche d'apprêt est formée à partir d'un sol de silice acidifié à un pH dans la plage de 2 à 5 avec un acide ayant un pKa inférieur à 3,5.

8. Article selon l'une quelconque des revendications 1 à 7, dans lequel le groupe hydrolysable est l'alcoxy, l'aryloxy, l'aralkyloxy, l'acyloxy ou l'halogéno et dans lequel le groupe non hydrolisable est l'alkyle, l'aryle et l'aralkyle.

9. Article selon l'une quelconque des revendications 1 à 8, dans lequel l'article est antiréfléchissant.

10. Procédé de fabrication d'un article, le procédé comprenant :
fournir un substrat ;
former une couche d'apprêt sur une surface du substrat, la couche d'apprêt comprenant une pluralité de nanoparticules de silice frittées à l'acide agencées afin de former un réseau poreux continu en trois dimensions, dans lequel la couche d'apprêt est formée à partir d'une composition de revêtement de couche d'apprêt comprenant un sol de silice acidifié avec un acide ayant un pKa inférieur à 3,5 à un pH compris dans une plage allant de 2 à 5 ; et
la fixation d'une couche d'hydrocarbure hydrophobe sur la couche d'apprêt en amenant à réagir une surface des nanoparticules de silice frittées à l'acide dans la couche d'apprêt avec un composé de silane ayant au moins un groupe silyle réactif et un groupe hydrocarbure hydrophobe.

11. Procédé selon la revendication 10, dans lequel le composé de silane est de Formule (I)
R¹-[Si(R²)₃₋ₓ(R³)ₓ]_{y} (I)
dans laquelle
R¹ est un alkyle, un alkylène, un aryle, un arylène ou une combinaison de ceux-ci;
chaque R² est indépendamment un hydroxyle ou un groupe hydrolysable;
chaque R³ est indépendamment un groupe non hydrolysable;
chaque x est un nombre entier égal à 0, 1 ou 2 ; et
y est un nombre entier égal à 1 ou 2.

12. Procédé selon la revendication 10 ou 11, dans lequel la formation de la couche d'apprêt comprend la formation d'une composition de revêtement de couche d'apprêt comprenant un sol de silice acidifié à un pH dans une plage de 2 à 5 avec un acide ayant un pKa inférieur à 3,5 et l'application de la composition de revêtement de couche d'apprêt sur une surface du substrat.

13. Procédé selon l'une quelconque des revendications 10 à 12, dans lequel la fixation d'une couche d'hydrocarbure hydrophobe sur la couche d'apprêt comprend la formation d'une composition de couche de revêtement d'hydrocarbure comprenant le composé de silane ; puis l'application de la composition de couche de revêtement d'hydrocarbure sur une surface de la couche d'apprêt.

14. Procédé selon la revendication 12, dans lequel la composition de revêtement de couche d'apprêt comprend en outre un agent de couplage du silane.

15. Procédé selon la revendication 13 ou 14, dans lequel la composition de couche de revêtement d'hydrocarbure comprend en outre un agent de réticulation.
